# EUROPEAN PATENT APPLICATION

(11) **EP 4 609 999 A1**
(43) Date of publication of application: **03.09.2025**
(21) Application number: 25157935.5
(22) Date of filing: 14.02.2025
(51) Int. Cl.: B25J 9/16, B25J 9/00

(54) **ROBOT ARRANGEMENT FOR ASSEMBLING A PART**

(30) Priority: 23.02.2024 GB 202402614
(71) Applicant: Airbus Operations Limited, Bristol BS34 7PA (GB); Cranfield University, Cranfield, Bedfordshire MK43 0AL (GB)
(72) Inventor: WEBB, Philip, Cranfield, MK43 0AL (GB); ASIF, Seemal, Cranfield, MK43 0AL (GB); LIAQAT, Amer, Bristol, BS34 7PA (GB); HOOSON, Aled, Bristol, BS34 7PA (GB)
(74) Representative: Worthington, Richard Easton

(57) **Abstract**

A robot arrangement, comprising: one or more robots for moving a component into an assembly position adjacent a fixed structure, wherein the robots are configured to operate collectively to move the component from an initial position located in a coarse adjustment zone into a fine rotational adjustment zone within a set distance of the fixed structure, wherein the coarse adjustment zone is at least the set distance from the fixed structure; and in the fine rotational adjustment zone, robots are configured to collectively perform a rotational alignment cycle to rotationally align the component with the assembly position of the component ready for joining the component to the fixed structure and, upon completion of the rotational alignment cycle, collectively perform a translational movement to move the component into the assembly position.

## Description

### FIELD OF THE INVENTION

The present invention relates to a robot arrangement and a method of moving a part into an assembly position.

### BACKGROUND OF THE INVENTION

The assembly of large structures, such as aircraft parts, typically employs the use of one or more robots that can manoeuvre the parts into the final assembly position. The positioning of parts is often performed to high tolerances, which can have a significant impact on the efficiency of the processes, as well as being computationally expensive. The robots are therefore expected to undergo one or more alignment processes. The way these alignment processes are undertaken can have a significant impact on the efficiency of the overall assembly process. Achieving rotational and positional accuracy for a large-volume part, e.g. of several metres in length and/or width in width is challenging, particularly when lifted by multiple robots. Robots, primarily designed for repetitive tasks, can lack precision. Overcoming accuracy issues in robots, considering dynamic and kinematic factors, poses its own challenge.

### SUMMARY OF THE INVENTION

A first aspect of the invention provides a robot arrangement, comprising: a plurality of robots for moving a part into an assembly position adjacent a fixed part, wherein the robots are configured to support the part and operate collectively to move the part from an initial position located in a coarse adjustment zone into a fine adjustment zone within a set distance of the fixed part, wherein the coarse adjustment zone is outside the fine adjustment zone; and
in the fine adjustment zone, the robots are configured to collectively perform a rotational alignment cycle to rotationally align the part with the assembly position of the part ready for joining the part to the fixed part and, upon completion of the rotational alignment cycle, collectively perform a solely translational movement, without rotation, to move the part into the assembly position.

Separating out the rotational alignment and translational alignment operations can simplify the process, reducing the computational requirements. By rotationally aligning prior to translation to the assembly position, the risk of the part clashing during assembly can be reduced and positional accuracy can be improved.

The part may be a large volume part, e.g. of several metres in length and/or width. The rotational alignment may be computed by comparing predicted and current position and orientation of the part until rotational alignment with the assembly position of the part is reached within a predetermined accuracy. The accuracy may be less than 1mm, less than 0.5 mm, less than 0.3mm or less than 0.2mm for example.

When manipulating a large scale part with multiple robots, deformation of the part to an extent greater than the desired positional accuracy is possible. Therefore the rotational alignment may be assessed at multiple positions across the part. The objective is to attain a specific position; upon reaching this position, metrology can be used to verify the reached location. The error may be determined by comparing the angular difference of the part, at one or more positions across the part, to the desired assembly position. New rotation matrix components are then computed using the error and angular position, and the rotational alignment process repeated until the orientation of the part corresponds to the orientation in the assembly position.

Calibration of individual robots enables correction of part position and rotation as the multiple robots operate synchronously to manipulate the part.

After completing the rotational alignment, the robots operate synchronously to translate the part into the assembly position. Since the final movement of the part into the assembly position is a pure translation, without rotation, deformation of the part in this final manipulation step is avoided leading to improved positional accuracy and reduced computational requirements and hence the potential for improved assembly speed. Furthermore, the risk of clash between the part being moved and the fixed part is reduced due to the lack of part deformation in this final step. Avoiding simultaneously applying both positional and rotational accuracies avoids the risk of introducing stress and potential damage to the part.

The fixed part may be any other part to which the part moved by the robots is to be assembled to create an assembly. By `fixed part' in this context it is meant that there is one stationary part (the fixed part) in space and the other is moving (the part moved by the robots). The fixed part may be substantially rigid and substantially rigidly secured in space, e.g. with an assembly jig or frame for example.

Upon completing the rotational alignment cycle, the robots are configured to collectively perform a translational alignment cycle to translationally align the part with the assembly position.

The translational alignment may be assessed at multiple positions across the part. The objective is to attain a specific position (i.e. the assembly position) of the part relative to the fixed part; upon reaching this position, metrology can be used to verify the reached position. The error may be determined by comparing the positional difference of the part, at one or more positions across the part, to the desired assembly position. Using the error and the position, and the translational alignment process is repeated until the position of the part corresponds to the assembly position within a threshold tolerance.

The translational alignment may be computed by comparing predicted and current position of the part until positional alignment with the assembly position of the part is reached within a predetermined accuracy. The accuracy may be less than 1mm, less than 0.5 mm, less than 0.3mm or less than 0.2mm for example.

The fine adjustment zone may include a fine translational adjustment zone nearest the fixed part within a second set distance of the fixed part, wherein the robots are configured to translate but not rotate the part in the fine translational adjustment zone, and a fine rotational adjustment zone outside the fine translational adjustment zone, wherein the robots are configured to perform the rotational alignment cycle in the fine rotational adjustment zone.

The part may comprise a set of temporary fastener holes, and wherein, upon moving the part into the assembly position, a robot is configured for inserting temporary fasteners into the temporary fastener holes to fasten the part to the fixed part.

The temporary fasteners can provide a quick means of fixing the part to the fixed structure. This can allow the robots to be decoupled from the part and the robots withdrawn from the part and used for further/other operations.

Upon moving the part into the assembly position, a robot may be configured to drill a plurality of fastener holes through abutting surfaces of the part and fixed part. This reduces the number of holes requiring alignment prior to assembly, improving assembly time and reducing cost.

The robot may be configured to insert a plurality of fasteners through the fastener holes to fasten the part to the fixed part.

The part may be secured to a jig, the jig comprising a plurality of end effector connectors, each end effector connector configured to couple to an end effector of a respective one of the plurality of robots for manipulating the part.

According to a further aspect of the invention, there is provided a method of moving a part into an assembly position adjacent a fixed part, wherein there is provided a plurality of robots adjacent the part, the method comprising:
operating the robots to collectively move the part from an initial position located in a coarse adjustment zone into a fine adjustment zone within a set distance of the fixed structure, wherein the coarse adjustment zone is outside the fine adjustment zone;
in the fine adjustment zone, operating the robots to collectively perform a rotational alignment cycle to rotationally align the part with the assembly position of the part ready for joining the part to the fixed part; and
upon completion of the rotational alignment cycle, operating the robots to collectively perform a solely translational movement, without rotation, to move the part into the assembly position.

The method may comprise, upon completing the rotational alignment cycle, operating the robots to collectively perform a translational alignment cycle to translationally align the part with the assembly position.

The fine adjustment zone may include a fine translational adjustment zone nearest the fixed part within a second set distance of the fixed part, and a fine rotational adjustment zone outside the fine translational adjustment zone. The method may further comprise operating the robots to translate but not rotate the part in the fine translational adjustment zone, and to perform the rotational alignment cycle in the fine rotational adjustment zone.

The method may comprise operating an image capture device to capture images of the part and/or fixed part to determine a position of a set of datum points on the part and/or fixed part.

The method may comprise, prior to collectively moving the part from the initial position, operating the robots to carry the image capture device and to operate the image capture device to capture images of the part and/or fixed part.

The part and the fixed part each comprise a respective set of temporary fastener holes, and the method further comprising inserting a set of temporary fasteners into the set of fastener holes to secure the part to the fixed part.

The part may be initially secured to a jig, the jig comprising a plurality of end effector connectors, each end effector connector coupled to an end effector of a respective one of the plurality of robots for manipulating the part. The method may comprise moving the part secured to the jig from the initial position into the assembly position adjacent the fixed part.

After the part is secured to the fixed part with the temporary fasteners, the method may then comprise detaching the jig from the part, and operating the robots to move the jig away from the part.

The method may comprise, upon moving the part into the assembly position, operating a robot to drill a plurality of fastener holes through abutting surfaces of the part and fixed part.

The method may comprise, upon drilling the plurality of fastener holes, operating a robot to insert a plurality of fasteners through the fastener holes to fasten the part to the fixed part.

The steps of drilling the plurality of fastener holes and inserting the plurality of fasteners may be performed after insertion of the set of temporary fasteners and prior to removal of the temporary fasteners.

This may increase the likelihood of the fastener holes remaining in the correct alignment position, and reduces the chance of swarf entering between the abutting surfaces, and burring forming between the surfaces.

The initial position of the part is located within a collection zone, the component having a positional tolerance in the initial position of at least an order of magnitude greater than a positional tolerance of the part in the assembly position.

The part may be an elongate structure having a length at least three times greater than its width, wherein a connection end of the part for connecting to the fixed part extends along the length of the part.

The elongate length of the part can make alignment more difficult and can mean that offsetting the location of the rotational alignment cycle is even more crucial due to the movement of the ends of the part during any rotation.

The part may be an aircraft part. The aircraft part may be a leading edge structure of an aircraft wing and/or the fixed part is a wingbox of an aircraft wing.

The robot arrangement or method may comprise an imaging system, the imaging system may comprise a tracker configured to determine a position of the part.

### BRIEF DESCRIPTION OF THE DRAWINGS

Embodiments of the invention will now be described with reference to the accompanying drawings, in which:
Figure 1 shows an aircraft;
Figure 2 shows a robot for operating on parts of the aircraft;
Figure 3 shows a leading edge structure secured to a jig for assembling to a fixed structure;
Figure 4 shows a first robot moving a scanner to capture images of a portion of the leading edge structure;
Figure 5 shows a second robot moving the scanner to capture images of a second portion of the leading edge structure;
Figure 6 shows the leading edge structure attached to two robots for lifting the leading edge structure;
Figure 7 shows the leading edge structure lifted by the robots in preparation for assembly;
Figure 8 shows the leading edge structure approaching the assembly position adjacent the fixed structure;
Figure 9 shows the leading edge structure in a coarse adjustment zone spaced from the fixed structure;
Figure 10 shows the leading edge structure in a fine rotational adjustment zone spaced from the fixed structure and closer to the fixed structure than the coarse adjustment zone;

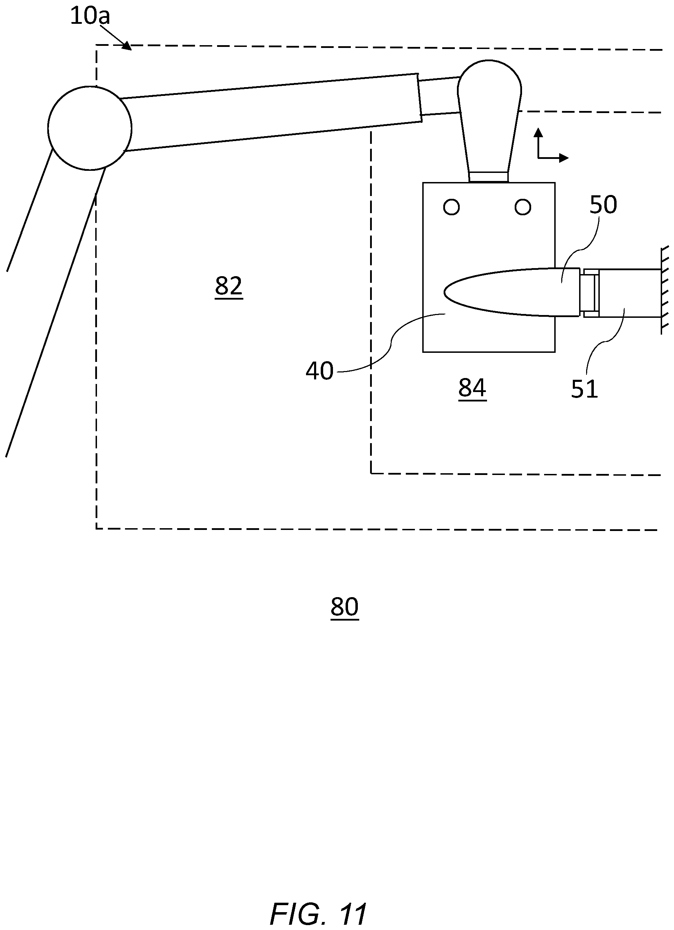

Figure 11 shows the leading edge structure in a fine translational adjustment zone adjacent the assembly position;
Figure 12 shows the leading edge structure in the assembly position adjacent the fixed structure;
Figure 13 shows a temporary fastener inserted into a fastener hole for temporarily securing the leading edge structure to the fixed structure;
Figure 14 shows the leading edge structure temporarily secured to the fixed structure;
Figure 15 shows a drilling module on the robot for drilling a fastener hole;
Figure 16 shows a fastener module on the robot for inserting a fastener into the fastener hole;
Figure 17 shows three robots arranged adjacent the leading edge structure for performing the assembly operations.

### DETAILED DESCRIPTION OF EMBODIMENT(S)

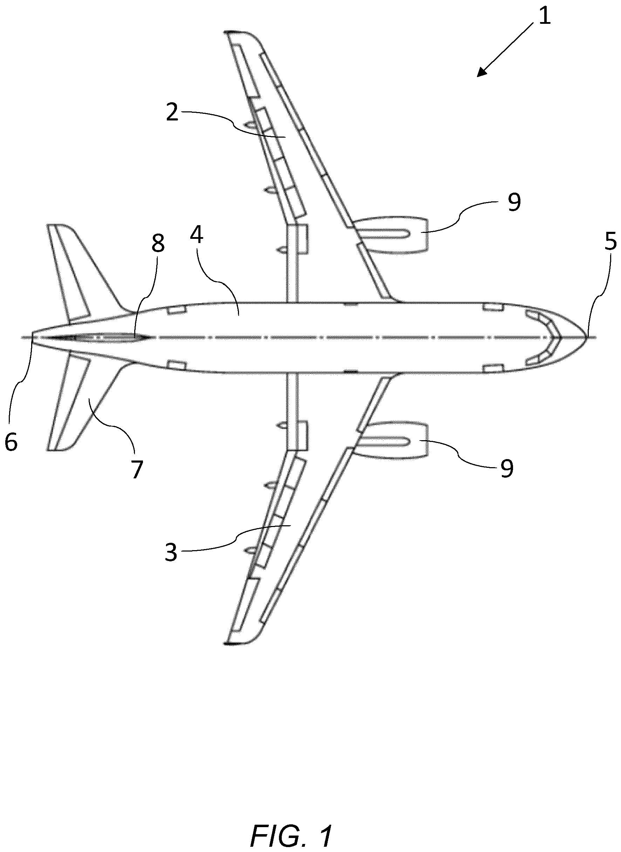

Figure 1 illustrates a typical fixed wing aircraft 1 having a port wing 2 and starboard wing 3 carrying wing mounted engines 9, the wings 2, 3 extending from a fuselage 4. The fuselage has a nose 5 and a tail 6 with horizontal and vertical stabiliser surfaces 7, 8 near the tail 6. The aircraft 1 is a typical jet passenger transonic transport aircraft but the invention is applicable to a wide variety of fixed wing aircraft types, including commercial, military, passenger, cargo, jet, propeller, general aviation, etc. with any number of engines attached to the wings or fuselage.

The assembly of aircraft 1 involves the assembly of a huge number of parts that are fitted to relatively high tolerances. The integration of robots into the aircraft assembly process has steadily increased over time due in part to the high speed and accuracy achievable with robotic systems, as well as the ability to automate processes. Yet the processes involved can still be time consuming and require constant calibration to avoid robot drift resulting from accumulated errors in the estimated position and orientation of the robot, as well as ensuring an accurate understanding of the parts the robot will operate on.

These processes can be further complicated by the interaction of multiple robots, particularly autonomous robots that can operate independently of each other and the surrounding environment.

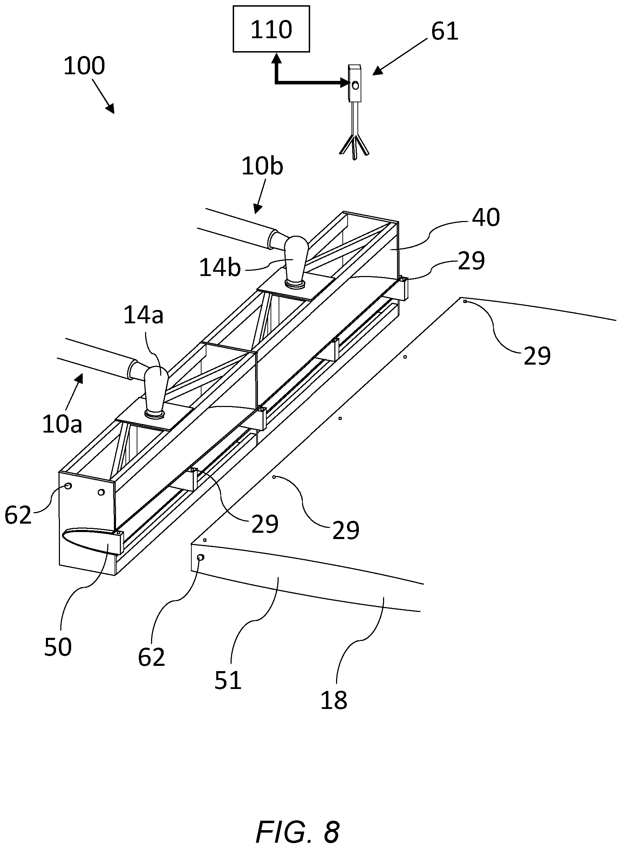

This invention will be discussed in regard to the automated assembly of a wing, and specifically the joining of a leading edge structure 50 of the wing 2, 3 to a wingbox 18 of the wing 2, 3 (See figure 8), although it will be appreciated that the invention is applicable to the assembly of a wide range of parts.

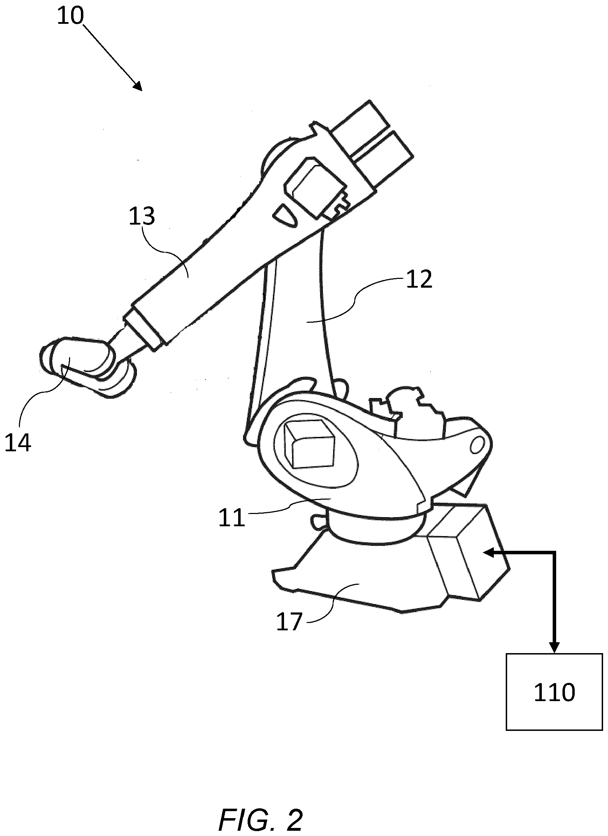

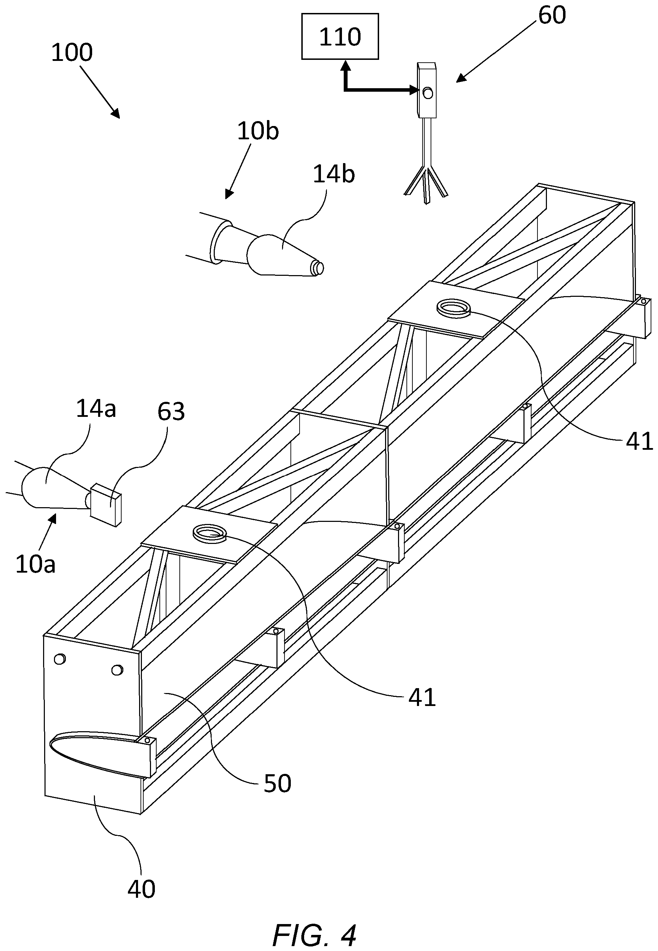

Figure 2 shows an example of a robot 10. The robot 10 may be an autonomous robot configured to operate independently based on its environment and without constant human interaction or rigidly pre-programmed operations. The robot 10 includes a first arm 12 rotatably attached to a rotatable base unit 11 that sits on a rigid base 17, and a second arm 13 rotatably attached to the first arm 12. At the end of the second arm 13 is an end effector 14 configured to attach to an end effector connector 41 (See figure 4).

The robot 10 forms part of a robot arrangement 100 controlled by a control system 110, as will be further described below.

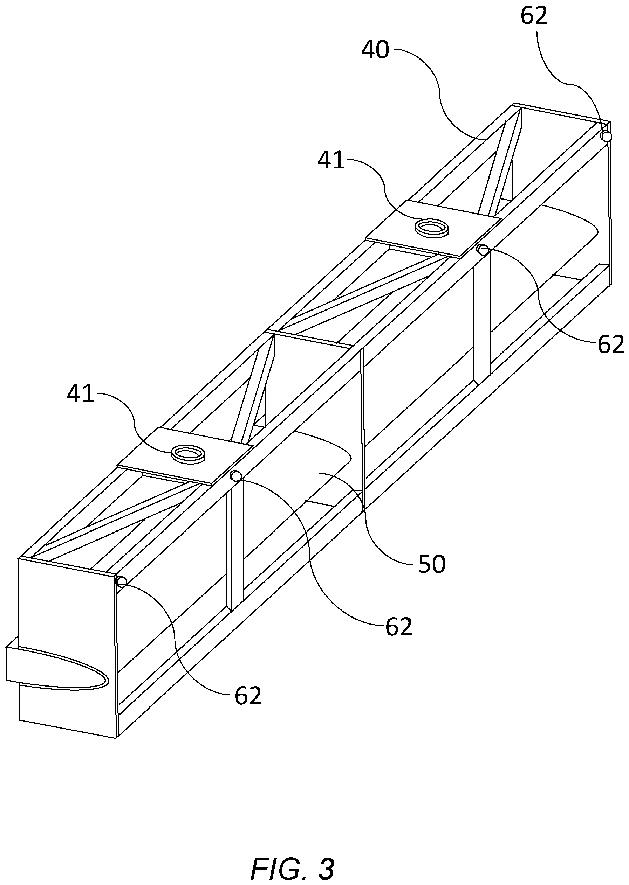

Figure 3 shows the leading edge structure 50 of an aircraft wing 2, 3 (i.e. a `part') that is to be attached to a fixed structure 51 of the wing 2, 3 (i.e. a `fixed part') - see figure 8 - such as a spar or other part of the wingbox 18. In the present context, 'fixed' refers to the structure not moving relative to its support base, such as the ground. The leading edge structure 50 is an elongate and flexible structure, having a length several times greater than its width (for examples, at least three times greater than its width). To assemble the leading edge structure 50 against the fixture structure 51, the leading edge structure 50 can be secured to a jig 40, such as that shown in the figures.

The jig 40 is a rigid structure, comparative to the leading edge structure 50, and substantially prevents flexing of the leading edge structure 50 as well as protecting the leading edge structure 50, e.g. during movement. The assembly process typically requires high tolerances to be maintained. The rigid securement of the leading edge structure 50 to the jig 40 helps to maintain the shape of the leading edge structure 50 during the assembly process to improve its fitment to the fixed structure 51.

The jig 40 can provide a suitable frame to which several parts of the robot arrangement 100 can be attached. As shown in figure 3, the jig 40 includes end effector connectors 41 for attaching to the end effectors 14 of a robot 10. Several parts of an imaging system may be attached to the jig 40, for instance a set of reflectors 62, e.g. spherically mounted retroreflectors (SMR) for use with a laser tracker, may be spaced across the jig 40. A tracker 61 of the imaging system, such as that shown in figure 4, can use the reflectors 62 as targets for determining the position of the jig 40.

A method of imaging the leading edge structure 50 in accordance with an example of the invention will now be described.

As shown in figure 4, the robot arrangement 100 includes two end effectors 14a, 14b attached to respective robots 10a, 10b. The robots 10a, 10b connect to the control system 110. The robots 10a, 10b are each positioned adj acent the leading edge structure 50 so as to be able to interact with the leading edge structure 50. Whilst the present examples include two robots 10a, 10b performing various operations on the leading edge structure 50, it will be appreciated that the operations may be performed by any number of robots, for example, three or more.

The robot 10a of the first end effector 14a is manoeuvred into a position to pick up and carry an image capture device 63 of the imaging system, such as a laser scanner. The first end effector 14a carries the image capture device 63 and moves it across the leading edge structure 50 to capture images of a first section of the leading edge structure 50. In doing so, the image capture device 63 is able to produce a composite image of the leading edge structure 50 that overlays multiple images spanning across first section of the leading edge structure 50.

A tracker 61 is arranged in line-of-sight with the image capture device 63 to determine the position of the image capture device 63 itself. In this manner, the relative position of each of the captured images can be more accurately and reliably determined.

Due to the finite length of the robot arms 12, 13, and the elongate shape of the leading edge structure 50 having a size and/or width dimension of several metres (e.g. around 10 metres in length and 3 metres in width), a single robot 10 may be unable to move the image capture device 63 to scan images across the entire leading edge structure 50.

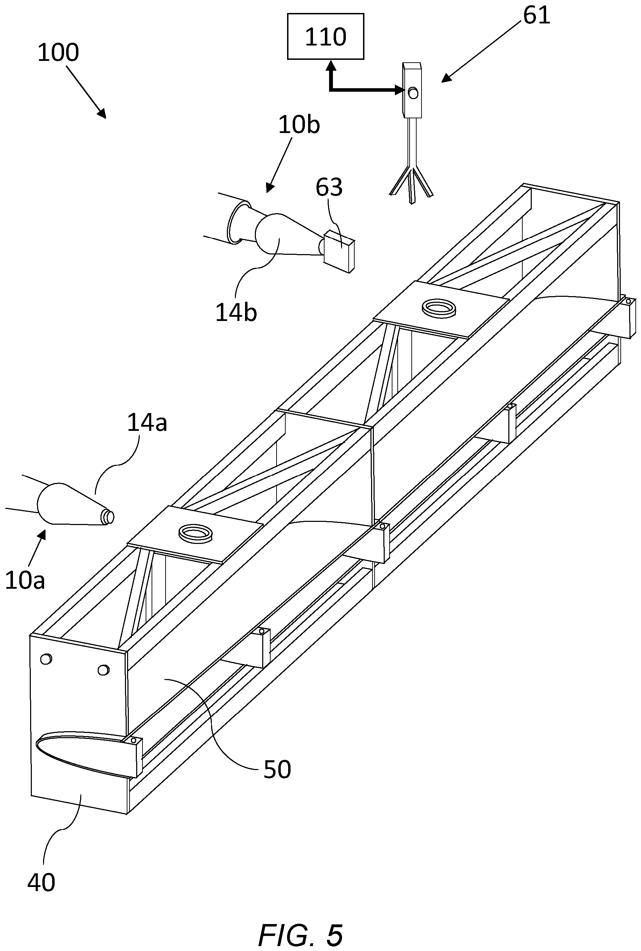

To address this issue, the first robot 10a passes the image capture device 63 to the second robot 10b. The second robot 10b is positioned adjacent a second section of the leading edge structure 50. The second end effector 14b collects the image capture device 63 and moves it across the leading edge structure 50 to capture images of a second section of the leading edge structure 50 that is not the first section (See figure 5), although it will be appreciated there may be some overlap between the first and second sections of the leading edge structure 50.

In the period of time when one of the robots 10a, 10b is carrying the image capture device 63, the other robot(s) 10a, 10b may be placed in standby. Alternatively, the other robot 10a, 10b may perform a different task within the working environment, either on the leading edge structure 50 or elsewhere in the surrounding environment.

The tracker 61 maintains line-of-sight with the image capture device 63 such that the position of the image capture device 63 can be correlated to the positions of the image capture device 63 when it was attached to the first end effector 14a. Accordingly, the image capture device 63 is able to produce a composite image of both the first and second sections of the leading edge structure 50 by stitching the images together.

An advantage of sequentially capturing images using a single image capture device 63, rather than providing an image capture device 63 for each robot 10a, 10b, is the simplification of the overall process of cross-correlating and combining the images. Whilst the operating time to perform the imaging task across the leading edge structure 50 may be decreased, the increased burden in correlating the images from separate image capture devices 63 is disproportionately increased. There are also considerable cost savings due to the relatively high cost of the image capture device, particularly in the case of a laser scanner, and the separate tracker 61 that would be required to track each image capture device 63.

It will be appreciated that the sequential interaction with the part described above may have advantages in various other applications, potentially resulting in similar advantages in terms of overall processing and equipment costs. For instance, a coordinate measuring machine (CMM) for measuring points on the leading edge structure 50 or a tool module for operating on the leading edge structure 50 may be passed sequentially between the robots 10a, 10b.

In some examples, in addition to capturing images of the leading edge structure 50, the imaging system may also capture images of the fixed structure 51. In this way, detailed images of both structures can be obtained to determine a position of a set of datum points on the leading edge structure 50 and the fixed structure 51 which are used for improving relative positioning of the structures.

As previously discussed, the jig 40 provides several advantages in that accessories can easily be attached to the frame of the jig without 40 requiring any direct modification or interference with the part. This can allow a common jig 40, and its associated fixings, to be used with several parts along a manufacturing line.

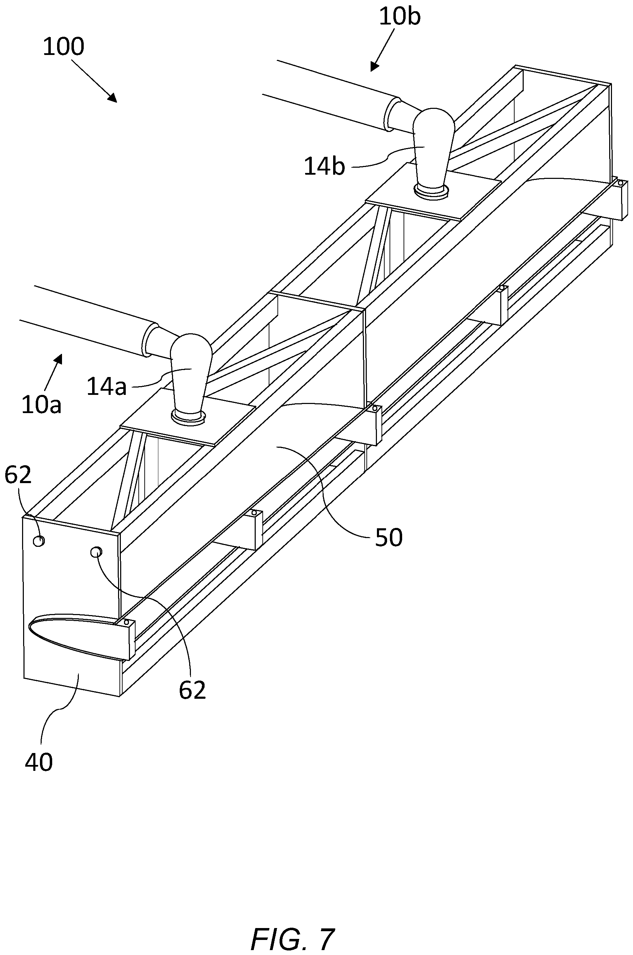

Upon completing this sequential operation, the robots 10a, 10b may then act simultaneously so as to collectively lift the leading edge structure 50 into an assembly position for it to be assembled to a fixed structure 51 of the wing 2, 3, as will now be described with reference to figures 7 to 10.

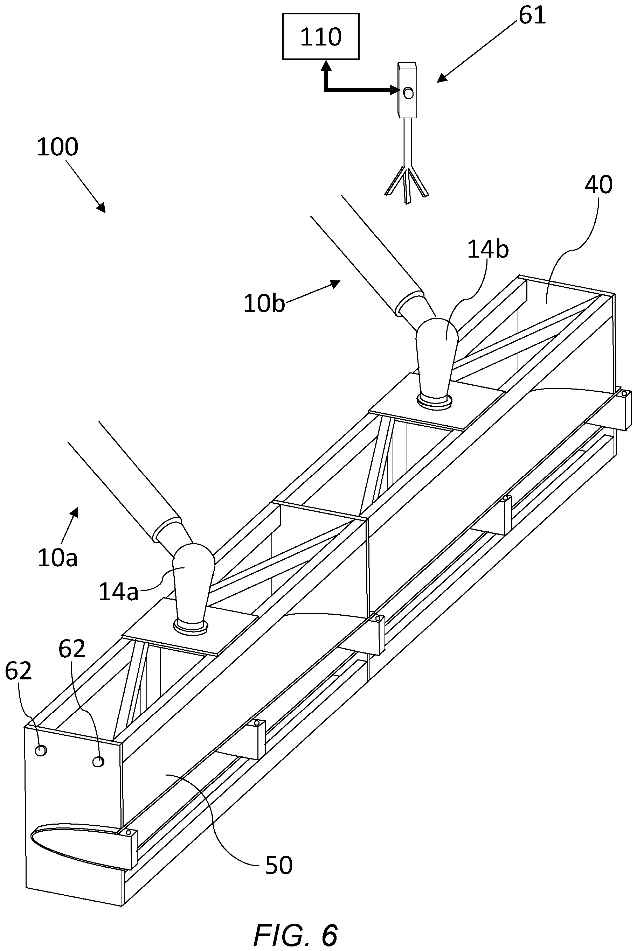

In order to achieve this, the end effectors 14a, 14b are each connected to a respective end effector connector 41, such as shown in figure 6. The end effector connectors 41 are shown as attached to the jig 40 in the present examples, although the end effector connectors 41 may be attached to the leading edge structure 51 itself in some examples.

The leading edge structure 50 is lifted by the robots 10a, 10b from a ground position (Figure 6) into an elevated position (Figure 7) and then moved towards an assembly position adjacent the fixed structure 51 (Figure 8). To guide the robots 10a, 10b, a set of reflectors 62 are fixed on the jig 40, and thereby fixed relative to the leading edge structure 50. The reflectors 62, which may each be a spherically mounted retroreflector (SMR) or similar device, operate in combination with the tracker 61 to inform the control system 110 regarding the position of the leading edge structure 50. In a similar manner to the image capture device 63, the reflectors 62 are arranged to maintain line-of-sight with the tracker 61.

In this manner, it will be appreciated that each of the robots 10a, 10b, the tracker 61, the reflectors 62 and the image capture device 63 may all connect to the control system 110 for controlling the movement of the robots 10a, 10b, or in the case of autonomous robots, feeding the robots 10a, 10b with information required to instruct its movement.

In the case of both the reflectors 62 and the image capture device 63 it will be understood that the line-of-sight with the tracker 61 may be temporarily blocked during operation, e.g. by an arm 12, 13 of a robot 10, 10a, 10b during movement, but that the tracker 61 is able to resume tracking the reflectors 62 and image capture device 63 once the obstruction is cleared. It will further be understood that the tracker 61 may be able to track only a single device at one time, such that the tracker 61 needs to, e.g., track a first reflector 62 and then subsequently a second reflector 62, and then later the first reflector 62 again, with this cycle repeating so as to continually track the reflectors 62 during movement.

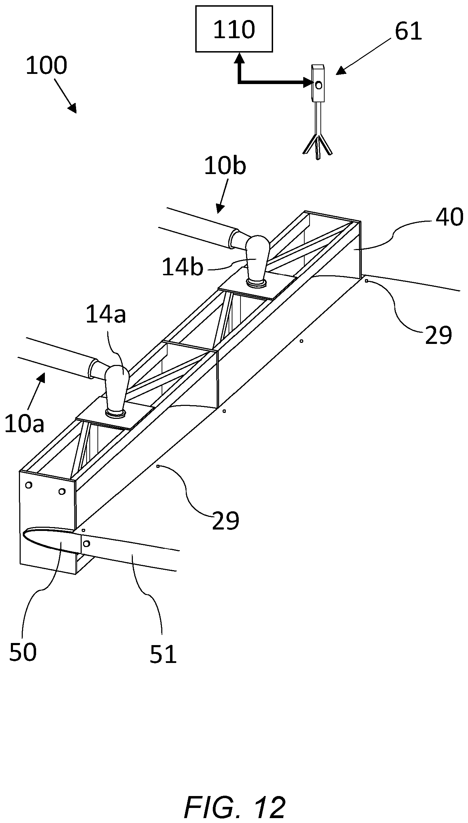

The assembly of many parts, particularly aircraft parts as in the present example, often requires adherence to relatively high tolerances. The accurate positioning of the parts to be assembled is therefore critical to achieving this. As explained previously, the image capture device 63 first captures images for the development of a detailed composite image of the leading edge structure 50 to be developed prior to moving the leading edge structure 50. The image capture device 63 may also capture images of the fixed structure 51. Upon developing this image, the reflectors 62 are able to indicate the overall position of the leading edge structure 50 in relation to the fixed structure 51 during transportation, which can be cross referenced to the information gathered by the image capture device 63 to determine the spatial position of all scanned parts of the leading edge structure 50. This facilitates accurate locating of the leading edge structure 50 into the assembly position (See figure 12). For example, fastening points on the leading edge structure 50 may be aligned with corresponding fastening points on the fixed structure 51.

In addition, the complexity of the respective connecting structures can add further complications due to, not only correctly aligning the leading edge structure 50 and fixed structure 51 in the assembly position, but moving the leading edge structure 50 towards the fixed structure 51 in a manner that avoids clashing, e.g. with protruding parts of the respective structure 50, 51.

A method of aligning the leading edge structure 50 into the assembly position adjacent the fixed structure 51 will now be described.

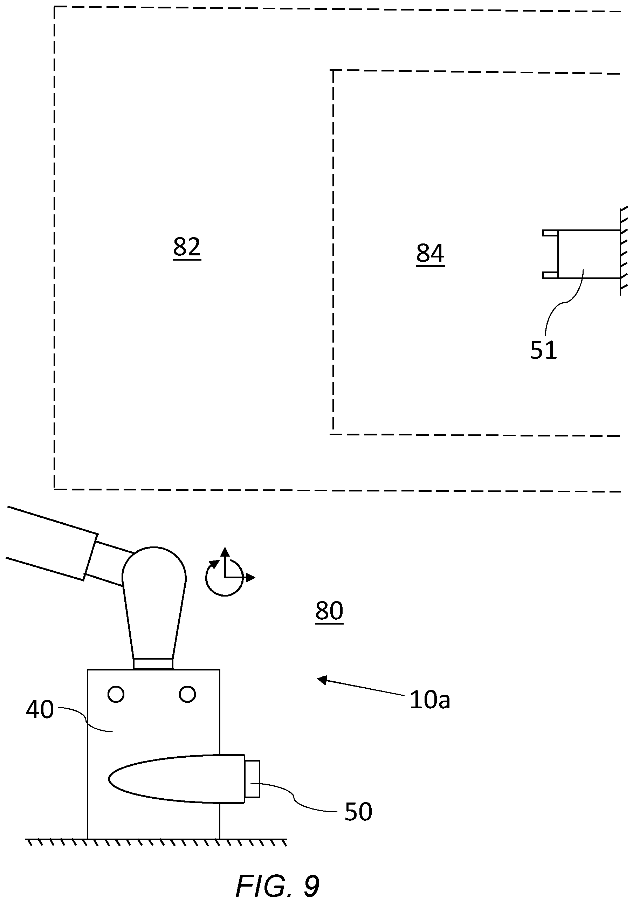

The leading edge structure 50 may be positioned in an initial position located in a coarse adjustment zone 80. The initial position may be a ground position, such as shown in figure 9. The initial position of the leading edge structure 50 may be within a collection zone. For instance, the collection zone may be a marked bay of the working environment in which the leading edge structure 50 is known to be present although the exact position of the leading edge structure 50 is not known, or is known to a low tolerance level. For example, the positional tolerance in the collection zone may be at least a magnitude greater than the position tolerance in the assembly position.

The coarse adjustment zone 80 is a set distance away from the fixed structure 51. For example, the coarse adjustment zone 80 may be more than 250 mm away from the fixed structure 51. In the coarse adjustment zone 80, the leading edge structure 50 is far enough away from the fixed structure 51 that the lower positional tolerance of the leading edge structure 50 does not risk clashing/impact with the fixed structure when the robots 10a, 10b rotate and translate the leading edge structure 50. Some small elastic deformation of the leading edge structure 50 due to the manipulation by the robots may also be acceptable at this stage.

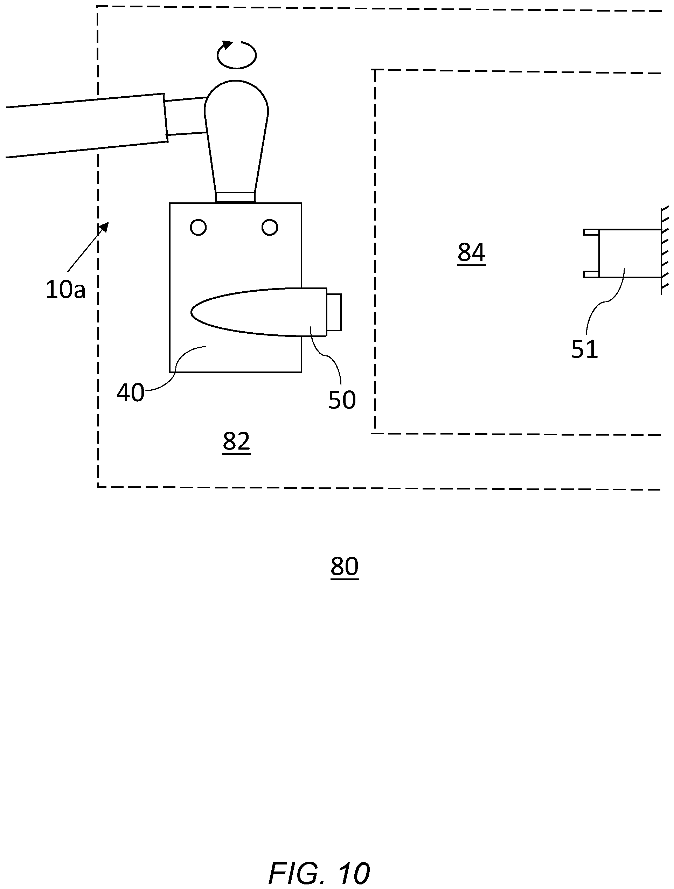

The robots 10a, 10b move the leading edge structure 50 from the coarse adjustment zone 80 to a fine adjustment zone 82 (see figure 10). The fine rotational adjustment zone 82 is within a set distance of the fixed structure 51, such as within 250 mm from the fixed structure 51 for example.

The fine adjustment zone includes a fine translational adjustment zone nearest the fixed structure 51 within a second set distance of the fixed structure, and a fine rotational adjustment zone outside the fine translational adjustment zone. The robots are configured to translate but not rotate the part in the fine translational adjustment zone, and are configured to perform the rotational alignment cycle in the fine rotational adjustment zone.

In the fine rotational adjustment zone 82, the robots 10a, 10b are operated to collectively perform a rotational alignment cycle to rotationally align the leading edge structure 50 with the assembly position of the part ready for joining the leading edge structure 50 to the fixed structure 51. The rotational alignment may be assessed at multiple positions across the leading edge structure 50. The objective is to attain a specific orientation of the leading edge structure 50 relative to the fixed structure 51; upon reaching this orientation, metrology can be used to verify the reached orientation. The error may be determined by comparing the angular difference of the leading edge structure 50, at one or more positions across the leading edge structure 50, to the desired assembly orientation. New rotation matrix components are then computed using the error and angular position, and the rotational alignment process repeated until the orientation of the leading edge structure 50 corresponds to the orientation in the assembly position within a threshold tolerance. Once rotationally aligned the leading edge structure 50 can be moved to the assembly position via translation only.

The rotational alignment cycle may comprise the robots 10a, 10b performing small rotational movements of the leading edge structure 50, with those rotational movements tracked by the tracker 61 via observation of the reflectors 62 on the leading edge structure 50 and fixed structure 51.

The fine adjustment zone 82 is positioned a minimum distance from the fixed structure 51 as the accuracy obtainable from the rotational alignment cycle increases the closer the leading edge structure 50 is to the fixed structure 51. That is to say that the closer the fine rotational adjustment zone 82 is to the fixed structure 51, the more accurately the leading edge structure 50 may be positioned relative to the assembly position.

Due to the leading edge structure 50 being elongate and with the connection end of the leading edge structure 50 configured to attach to the fixed structure 51 extending along the elongate length of the leading edge structure 50, even relatively minor rotational adjustments risk impact between the leading edge structure 50 and the fixed structure 51 that is to be avoided. Consequently, the fine rotational adjustment zone 82 is spaced at least a minimum set distance from the fixed structure 51.

A compromise between avoiding impact and increased accuracy is therefore desirable. In some examples, the fine rotational adjustment zone 82 may be between 200 mm and 250 mm from the fixed structure.

Upon completion of the rotational alignment cycle, the robots 10a, 10b collectively operate to move the leading edge structure 50 from the fine rotational adjustment zone into a fine translational adjustment zone 84 that is within a set distance of the fixed structure 51.

The fine rotational adjustment zone 82 is between the coarse adjustment zone 80 and the fine translational adjustment zone 84, such that the fine rotational adjustment zone 82 is within a second set distance from the fixed structure that is less than the first set distance. In some examples, the fine translational adjustment zone 84 may be within 200 from the fixed structure.

In the fine translational adjustment zone 84, the robots 10a, 10b are operated to collectively perform a translational alignment cycle to translationally arrange the leading edge structure 50 ready for translational movement into the assembly position. In a similar manner to the rotational alignment cycle, the translational alignment cycle may comprise the robots 10a, 10b performing small translational movements of the leading edge structure 50, with those translational movements tracked by the tracker 61 via observation of the reflectors 62 on the leading edge structure 50 and fixed structure 51.

Once the leading edge structure 50 is oriented to be rotationally aligned with the assembly position in the fine rotational adjustment zone 82, the leading edge structure 50 need only be moved translationally, i.e. in a straight line, to reach the assembly position so that the leading edge structure 50 and the fixed structure 51 can be assembled together.

The translational alignment may be assessed at multiple positions across the leading edge structure 50. The objective is to attain a specific position (i.e. the assembly position) of the leading edge structure 50 relative to the fixed structure 51; upon reaching this position, metrology can be used to verify the reached position. The error may be determined by comparing the offset distance of the leading edge structure 50, at one or more positions across the leading edge structure 50, to the desired assembly position. New matrix components are then computed using the error and position, and the translational alignment process repeated until the position of the leading edge structure 50 corresponds to the assembly position within a threshold tolerance.

In the fine translational adjustment zone 84, no further rotation of the leading edge structure 50 occurs to move the leading edge structure 50 into the assembly position. In other words, the leading edge structure 50 is translated but not rotated in the fine translational adjustment zone when bringing the leading edge structure 50 through the fine translation adjustment zone 84 into the assembly position.

Once in the assembly position, the process of attaching the leading edge structure 50 to the fixed structure 51 begins. To achieve this, the leading edge structure 50 may be temporarily secured to the fixed structure 51 using temporary fasteners 30 that are inserted through pre-drilled fastener holes 29 (See figure 8 and figures 12 to 14).

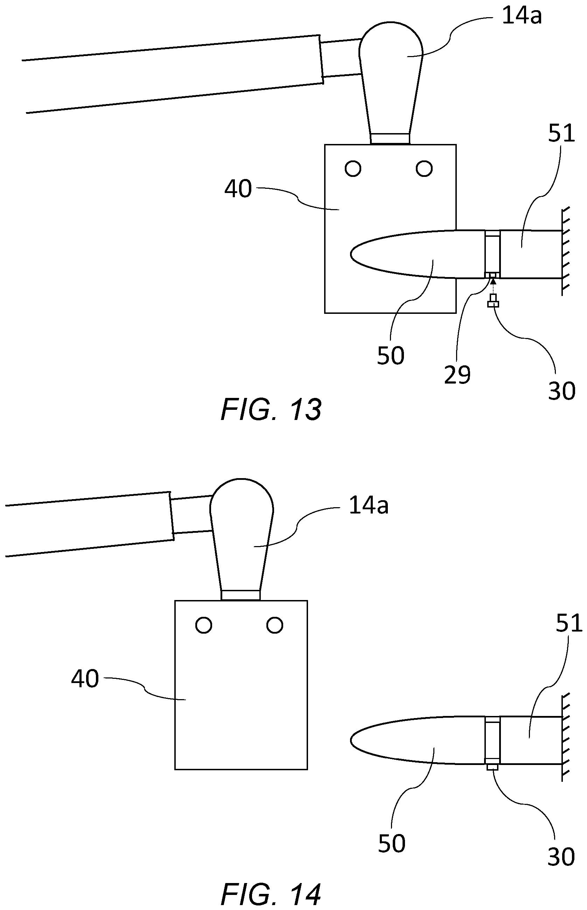

The leading edge structure 50 and fixed structure 51 may each comprise respective sets of fastening holes 29 that are aligned with each other in the assembly position, such that a fastener hole 29 of the leading edge structure 50 has a corresponding fastener hole 29 of the fixed structure 51 with which it aligns in the assembly position. An example of this arrangement is shown in figure 13. A set of temporary fasteners 30 can be placed into the fastener holes 29 to fix the structures 50, 51 together.

The fastening holes 29 may function as the aforementioned fastening points that are imaged and tracked by the imaging system. Alternatively, or in addition, the fastening points may be determined based on other features, such as one or more edges of the structures 50, 51.

In the present example, the leading edge structure 50 and fixed structure 51 are each shown to comprise five fastener holes - see figure 8 (only some of which are labelled), although each structure 50, 51 may comprise many more pre-drilled fastener holes 29, such as thirty or more pre-drilled fastener holes 29.

In this configuration, the weight of the leading edge structure 50 can be supported by the temporary fasteners 30, allowing the jig 40 to be detached from the leading edge structure 51. Consequently, the robots 10a, 10b can move the jig 40 away from the leading edge structure 50. This provides additional access to the assembly area, as well as freeing up the robots 10a, 10b for further operations, as will be explained below.

Typically, the number of pre-drilled fastener holes 29 will be determined based on a compromise between ensuring the leading edge structure 50 is fixedly secured to the fixed structure 51 and reducing the burden in aligning respective fastener holes 29. High tolerances are required to ensure the pre-drilled fastener holes 29 on the leading edge structure 50 and fixed structure 51 are in good alignment during movement to the assembly position, and the burden in achieving that tolerance level increases rapidly with each additional fastener hole 29 that requires alignment.

This burden can be greatly reduced by minimising the number of pre-drilled fastener holes 29, and subsequently drilling additional fastener holes 29a through abutting surfaces of the leading edge structure 51 and fixed structure 51 when in the assembly position. There may be many more additional fastener holes 29a than pre-drilled fastener holes 29, such as one hundred or more.

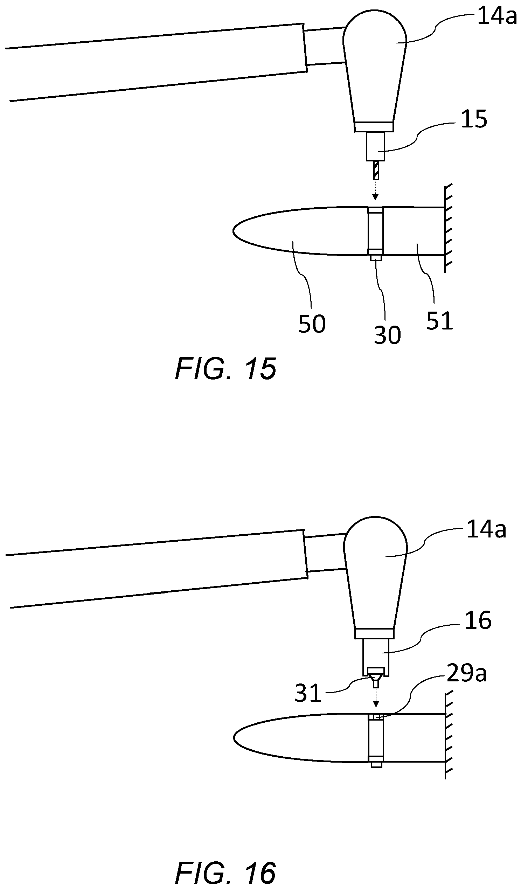

Concurrent drilling of the abutting surfaces to form the additional fastener holes 29a ensures alignment of the drilled holes. This operation may be performed using the robots 10a, 10b, which are now detached from the jig 40. As shown in figure 15, a drilling module 15 may be attached to the end effector 14a, 14b of a robot 10a, 10b to perform the drilling operation.

Upon drilling the additional fastener holes 29a, and prior to removal of the temporary fasteners 30, a set of permanent fasteners 31 is inserted into the additional fastener holes 29a (See figure 16). In the present context, a permanent fastener 31 is any fastener intended to remain on an assembly during service, although the permanent fastener 31 may be removable, for example during service and maintenance inspections.

At this point, the temporary fasteners 30 can be removed and replaced by permanent fasteners 31, thereby fully assembling the leading edge structure 50 to the fixed structure 51.

Whilst the previous examples have focussed on the interaction with the leading edge structure 50 and/or fixed structure 51 of an aircraft 1, the invention is applicable to a range of other aircraft parts, and parts from another industries, such as the automotive industry.

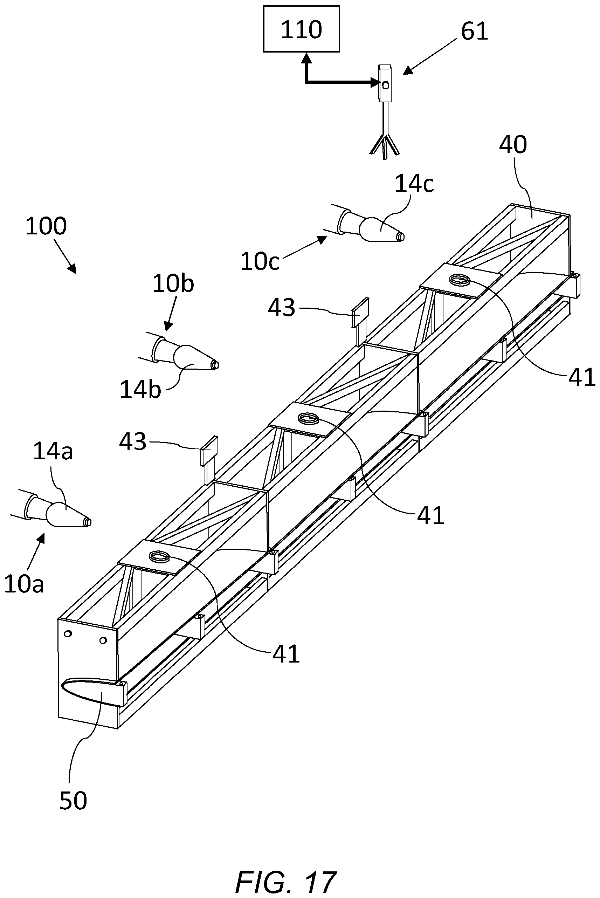

The invention has thus far been discussed in relation to the sequential and simultaneous operation of two robots 10a, 10b, however it will be appreciated that the advantages of the invention may be further apparent when more than two robots 10a, 10b are operated simultaneously and/or sequentially. For instance, figure 17 shows a leading edge structure 50 arranged to be lifted by first, second and third robots 10a, 10b, 10c each having first, second and third end effectors 14a, 14b, 14c.

Whilst the invention primarily relates to the accuracy required by the robots to manipulate the part in the fine adjustment zone, the same error correction cycle used to position the robot end effectors can also be used in the initial coupling of the robots to the jig/part so that the jig/part can be moved/lifted from the ground position (Figure 6) into the elevated position (Figure 7). The jig/part needs to be initially placed on the ground in a place marked area of a cell. The accuracy of this initially positioning may be around +/- 50mm. So long as the jig/part is in this rough location then the robots can use the error correction cycle to move to dock their end effectors with the connections on the jig/part.

Furthermore, the same error correction cycle can be used on a single one of the robots when it moves from a 'home' position to any pickup position, for example a pickup position on a tool changer. This helps to remove any positional and rotational errors and ensures safe engagement of the robot with the designated tool changer without introducing any damage.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A robot arrangement, comprising:
a plurality of robots for moving a part into an assembly position adjacent a fixed part, wherein the robots are configured to support the part and operate collectively to move the part from an initial position located in a coarse adjustment zone into a fine adjustment zone within a set distance of the fixed part, wherein the coarse adjustment zone is outside the fine adjustment zone; and
in the fine adjustment zone, the robots are configured to collectively perform a rotational alignment cycle to rotationally align the part with the assembly position of the part ready for joining the part to the fixed part and, upon completion of the rotational alignment cycle, collectively perform a solely translational movement, without rotation, to move the part into the assembly position.

2. The robot arrangement of claim 1, wherein, upon completing the rotational alignment cycle, the robots are configured to collectively perform a translational alignment cycle to translationally align the part with the assembly position.

3. The robot arrangement of claim 1 or claim 2, wherein the fine adjustment zone includes a fine translational adjustment zone nearest the fixed part within a second set distance of the fixed part, wherein the robots are configured to translate but not rotate the part in the fine translational adjustment zone, and a fine rotational adjustment zone outside the fine translational adjustment zone, wherein the robots are configured to perform the rotational alignment cycle in the fine rotational adjustment zone, and/or wherein the part comprises a set of temporary fastener holes, and wherein, upon moving the part into the assembly position, a robot is configured for inserting temporary fasteners into the temporary fastener holes to fasten the part to the fixed part.

4. The robot arrangement of any preceding claim, wherein, upon moving the part into the assembly position, a robot is configured to drill a plurality of fastener holes through abutting surfaces of the part and fixed part, optionally wherein a robot is configured to insert a plurality of fasteners through the fastener holes to fasten the part to the fixed part.

5. The robot arrangement of any preceding claim, wherein the part is secured to a jig, the jig comprising a plurality of end effector connectors, each end effector connector configured to couple to an end effector of a respective one of the plurality of robots for manipulating the component.

6. A method of moving a part into an assembly position adjacent a fixed part, wherein there is provided a plurality of robots adjacent the part, the method comprising:
operating the robots to collectively move the part from an initial position located in a coarse adjustment zone into a fine adjustment zone within a set distance of the fixed structure, wherein the coarse adjustment zone is outside the fine adjustment zone;
in the fine adjustment zone, operating the robots to collectively perform a rotational alignment cycle to rotationally align the part with the assembly position of the part ready for joining the part to the fixed part; and
upon completion of the rotational alignment cycle, operating the robots to collectively perform a solely translational movement, without rotation, to move the part into the assembly position.

7. The method of claim 6, comprising, upon completing the rotational alignment cycle, operating the robots to collectively perform a translational alignment cycle to translationally align the part with the assembly position, optionally wherein the fine adjustment zone includes a fine translational adjustment zone nearest the fixed part within a second set distance of the fixed part, and a fine rotational adjustment zone outside the fine translational adjustment zone, the method further comprising operating the robots to translate but not rotate the part in the fine translational adjustment zone, and to perform the rotational alignment cycle in the fine rotational adjustment zone.

8. The method of any one of claims 6 to 7, comprising operating an image capture device to capture images of the part and/or fixed part to determine a position of a set of datum points on the part and/or fixed part, optionally wherein the method comprises, prior to collectively moving the part from the initial position, operating the robots to carry the image capture device and to operate the image capture device to capture images of the part and/or fixed part.

9. The method of any one of claims 6 to 8, wherein the part and the fixed part each comprise a respective set of temporary fastener holes, and the method further comprising inserting a set of temporary fasteners into the set of fastener holes to secure the part to the fixed part.

10. The method of any one of claims 6 to 9, wherein part is initially secured to a jig, the jig comprising a plurality of end effector connectors, each end effector connector is coupled to an end effector of a respective one of the plurality of robots for manipulating the part, the method comprising moving the part secured to the jig from the initial position into the assembly position adjacent the fixed part.

11. The method of claims 9 or 10, wherein after the part is secured to the fixed part with the temporary fasteners, then detaching the jig from the part, and operating the robots to move the jig away from the part.

12. The method of any one of claims 6 to 11 comprising, upon moving the part into the assembly position, operating a robot to drill a plurality of fastener holes through abutting surfaces of the part and fixed part, optionally wherein the method comprises, upon drilling the plurality of fastener holes, operating a robot to insert a plurality of fasteners through the fastener holes to fasten the part to the fixed part.

13. The robot arrangement or method of any preceding claim, wherein the initial position of the part is located within a collection zone, the component having a positional tolerance in the initial position of at least an order of magnitude greater than a positional tolerance of the part in the assembly position.

14. The robot arrangement or method of any preceding claim, wherein the part is an elongate part having a length at least three times greater than its width, wherein a connection end of the part for connecting to the fixed part extends along the length of the part, and/or wherein the part is an aircraft part, preferably the aircraft part is a leading edge structure of an aircraft wing and/or the fixed part is a wingbox of an aircraft wing.

15. The robot arrangement or method of any preceding claim, further comprising an imaging system, the imaging system comprising a tracker configured to determine a position of the part.
